# EUROPEAN PATENT SPECIFICATION

(11) **EP 1 640 407 B1**
(45) Date of publication and mention of the grant of the patent: **14.11.2007**
(21) Application number: 05386022.7
(22) Date of filing: 22.09.2005
(51) Int. Cl.: C08J 9/12, C08F 12/08

(54) **Food packaging tray made of non-laminated expanded polystyrene**
Verpackungsschale für Nahrungsmittel hergestellt aus nicht-laminiertem Polystyrol
Barquette d'emballage pour aliments non laminé préparés à partir de polystyrène

(30) Priority: 23.09.2004 GR 2004100379
(43) Date of publication of application: 29.03.2006
(73) Proprietor: Weply Limited, 1065 Nicosia (CY)
(72) Inventor: Christodoulou, Christala, Nicosia (CY)
(74) Representative: Fragi, Lemonia

(56) References cited:
- DE-U1- 7 935 750
- GB-A- 803 835
- US-A- 3 468 467

## Description

The invention relates to expanded polystyrene food packaging tray, with partially open cells, with the ability to absorb liquids inside it, whose external surfaces are of closed cell type, hydrophobic. This way, an apparent surface glazing is formed which is continuous and uniform enough, that the produced material is made of a single-layer, without any coating with surface membranes for the retention of liquids (non - laminated). It refers, as well, to its method of production.

In the recent years, packaging trays and other expanded polystyrene products which can absorb liquids from foodstuffs have been developed. These products are produced either with a combination of expanded polystyrene and non-styrenic absorbing materials, such as paper mass, or by a combination of expanded or non-expanded polymeric materials, joined together with various methods of application.

In the sequel, these expanded polystyrene products of the previous technology, with the capability to absorb liquids, will be examined.

The products made of expanded polystyrene combined with absorbing paper mass or other absorbing material of a non-styrenic base, are produced from three independent sheets. The external sheets are made of polymeric materials and, at least one of them is made of expanded polystyrene. The intermediate sheet consists of absorbing paper mass or other absorbing material. These three sheets are joined together (laminated) either by thermal joining or with the use of gluing substance. The inner sheet that lies on the side that will come into contact with the foodstuff or the moisture is perforated with small holes so that the liquids of the foodstuff pass on to the intermediate absorbing material. The final sheet, which is produced by the three individual sheets and the intermediate joining substances, mentioned above, can be shaped in a forming press in order to obtain lateral walls and to take the usual form of the packaging tray. The tray produced with this method has significant disadvantages in terms of weight and cost. The final product is heavy and utilizes at least two different types of raw materials, something that increases the production cost further.

In addition, recycling of the final product is very difficult as it consists of three joined sheets. In this case, in order for the product to be recycled, the different materials must be separated from each other.

These products are made of three sheets of polymer materials. The intermediate sheet is of expanded polymeric material, which has the ability to absorb the liquids from the foodstuff. The absorbance is achieved because the expansion is performed in such manner that open cells of the expanded material are produced. The open cells form a foam material with a spider web structure. This structure is hydrophilic due to capillary phenomena applying, as in the case of a sponge

The above intermediate absorbing material is joined (laminated) with the external polymeric sheets, either by thermal joining or with the use of gluing substance. The external sheets are either made of expanded polymeric materials, or by simple, non-expanded polymeric materials. In the case where the external sheet is made of expanded material, closed cells expansion is applied, i.e. the material will consist of adjacent polygon closed cells. The closed cells' expanded polymeric material is a hydrophobic structure, as the cells do not communicate with each other. The external sheets operate as a membrane for the retention of liquids in the intermediate absorbing sheet and in parallel, they increase the mechanical strength of the product.

The external sheet, made of a polymer material, which lies on the side that will come into contact with the foodstuff or the moisture, is perforated with small openings, so that the liquids pass through to the intermediate, absorptive material.. The final sheet which is produced by the intermediate absorbing expanded polystyrene, the external polymeric sheets and the gluing substances, should they exist, can be shaped in a forming press in order to obtain lateral walls and take the form of the packaging tray or other useful forms.

The products produced with this method exhibit significant disadvantages in production cost. The final product, in order to be produced, requires the production of three different sheets and the lamination of them, together. This means that several production stages are required, with the respective labor and energy cost, as well as the cost of storing a variety of materials. Furthermore, the recycling of the material, if the external sheets are made of different materials, e.g. polystyrene and polyethylene, is much complicated. In this case, in order that the product is recycled, the materials of different categories are separated, first.

The products, according to the present invention, have the following advantages.
a) The production of only one single sheet of expanded material is necessary, without welding (non-laminated). Thus, the various stages for the production of the external and intermediate absorptive sheets are avoided, with the subsequent savings in raw materials, labor cost and energy, as well as with the respective improvement of the overall production speed.
b) The lamination phases of the two external sheets onto the intermediate absorptive sheet are avoided, with the respective saving in labor cost and energy.
c) The storage of a large variety of raw materials required for the production of the different sheets, as well as the gluing substances, used for joining the sheets together, is avoided.
d) Recycling of the final product is simplified as a process, as it consists of one single sheet and the separation of different glued materials is not required. The advantage with respect to recycling has two components:
   i. The recycling of excess material during the production process and mainly the final shaping process, where the frame (skeleton) that surrounds the products remains on the sheet, once the objects are removed. This recycle is important, as it concerns usually between 10 and 30 percent, or the material produced, depending on the sheets and the size of the object and its placement on the sheet.
   ii. The recycling of the products which were used as packaging materials and later returned to a recycling plant.

The material is produced by compression by screw (extrusion). It concerns the production with the use of an extruder, where for fast heating and progressive cooling, it is usually, though not always, a twin-screw in line extruder, with the first screw operating at a high rotational speed for fast heating and the second being longer and operating at a low rotational speed so that enough time is provided for the dissipation of the heat.

A single - screw extruder can be used, but due to the long necessary length it would require a high acquisition cost.

The production involves: The introduction of the raw material: Heating at a temperature of 180°C to 280°C. During this phase melting of the raw materials occur, followed by stirring for obtaining a homogeneous mixture, and compression to a high pressure of 80-300 Bar. Then, the blowing agent is introduced so that a fluid mass is produced in the form of a viscous gel. Then, the material is cooled at a temperature of 115°C to 165°C, so that the foam (the cells) does not collapse by the accumulated heat of the material. Finally, it is extracted, through a die with a narrow slot-like opening for maintaining a high pressure inside the extruder, to a low pressure -usually atmospheric- environment and a temperature for the solidification of the material, between 10°C and 80°C. During the period of residence of the material inside the extruder, the high pressures are maintained, in order that the expanding agent remains in liquid, or extremely compressed gaseous state and the mixture remains in the form of a gel.

When the material comes out of the slot-like opening in the low pressure and temperature conditions, two changes take place: the blowing agent contained is immediately detonated to the gaseous state and forms gas cells inside the material that expand in a foamy form, and, by progressive cooling, the material becomes solid in the form of solid foam. After the extraction, the expansion and the cooling for solidification, the material is collected in the form of rolls, sheets, tubes or others forms, depending on the application. The shape depends on the shape of the slot-like opening and on how the material is driven while it is cooled; usually the slot-like opening is circular, so that a tube is formed, the diameter of which increases with compressed air and mechanical guidance. In the sequel, the tube is slitted in the longitudinal dimension and a sheet is produced that is wound in the form of rolls. In other applications, the slot - like opening is straight, so that with suitable guidance and cooling, a plate is produced.

The blowing agent can be an organic material, such as hydrocarbons, alcohols, chlorofluorocarbons, etc., or an inorganic material such as nitrogen, carbon dioxide, argon, helium, etc. The blowing agent is introduced in a ratio between 0,1% and 6% w/w. This fraction determines the density and the specific gravity of the final product.

During the entry of the raw materials, certain additives are introduced, such as dyes, fire retardation agents, lubricating materials, agents for dissipating static electricity, additives for nucleation, etc. The additive for nucleation is particularly necessary and usually consists of inorganic materials in the form of fine powder, and determines the density of the cells of the expanded material. It can be talc, calcium carbonate, etc. The nucleating additive is introduced in a ratio between 0,1% and 6,5% w/w. The optimum ratio is between 1,5% and 5% w/w. The quality of this additive depends on the number of granules it contains per unit of weight. When a high amount of additive of a high ratio of granules per unit weight is used, a foamy material is produced with small, densely spaced cells, whereas when a low amount of additive of a low ratio of granules per unit weight is used a foamy material is produced with large, sparsely spaced cells.

The foamy expanded polystyrene is normally composed of closed cells with abnormal polygon form, the surfaces of which are adjacent to each other. This material is hydrophobic because its cells are closed. Thus the water and the other liquids do not have the ability to penetrate it.

For the production of expanded polystyrene, which has the ability to absorb liquids, it is necessary to produce foamy material with partially open cells. The open cells have a spider-web form and the surfaces of the polygon cells exhibit openings, thus forming a spongy solid material. The higher the fraction of open cells as opposed to the closed cells, the larger the ability to absorb liquids. The foamy material with partially open cells absorbs liquids due to the capillary phenomena.

For producing expanded polystyrene with partially open cells, two types of polystyrene are introduced into the production process described above. One is the general purpose crystal polystyrene and the other is self expandable polystyrene, which contains the expanding agent. The ratio of these two types of polystyrene by weight ranges between 4 parts of general purpose polystyrene per 0,2 parts of expandable polystyrene, to 1 part of general purpose polystyrene per 3,9 parts of expandable polystyrene. Better results are obtained by a ratio of 1 part of general purpose polystyrene per 2,1 parts of expandable polystyrene and up to a ratio of 2 parts of general purpose polystyrene per 1,1 parts of expandable polystyrene. Even better results are obtained by a ratio of 1 part of general purpose polystyrene per 1,7 parts of expandable polystyrene and up to a ratio of 1,5 parts of general purpose polystyrene per 0,1 parts of expandable polystyrene. The absorptivity in water by weight can reach ten times the weight of the foamy polystyrene.

The absorptive material produced with the above method, should it concern a sheet that will be used for applications which require the absorption of liquids, features the disadvantage that, once it absorbs the liquid, its external surfaces are wet and the products or materials it is determined to protect remain in continuous contact with the wet surfaces of the absorptive material, as would happen if a sponge was used. For this reason, these materials are externally laminated with continuous surface liquid repellent - hydrophobic membranes. In the sequel, several small holes are opened on the surface of the membrane, which will be in contract with the foodstuff, so that liquids pass through them, due to the capillary phenomenon. The liquids are retained internally due to the capillary phenomenon and the external surfaces are clean and dry to a high degree, in order to surround the product they were designed to.

However, the mixture of expandable polystyrene and general purpose polystyrene, when it comes out of the extruder, may under certain circumstances, render the external surfaces of the sheet, of closed cells' type, hydrophobic. This way, an apparent surface glazing is formed which is continuous and uniform enough, for the lamination of the liquid repellent/hydrophobic membranes to be unnecessary. The conditions for this to occur were found to be that the mixture of the expandable polystyrene and the general purpose polystyrene, have a mean molecular weight, by weight, Mw, between 140,000 and 360,000, or better between 170000 to 330000, or even better between 210,000 and 310,000 as measured by size exclusion chromatographer. Best results are achieved at molecular weight of 305000.

The sheets produced with the above method do not require lamination with hydrophobic membranes, in order that their surfaces remain dry and hydrophobic. In the sequel, this sheet is pierced with several small holes from the side that will come into contract with the foodstuff or the moisture, and is formed, if required, in a forming press, so that it takes its final shape. The holes of the external surface have a size ranging between 0,1 mm and 6 mm, with an optimum range of 0,8 to 2,5 mm. The other side of the sheet is not perforated so that it remains dry and clean. If the product is aimed for building or industrial applications for the absorption of liquids, then the surfaces are perforated on either one or both sides, depending on the needs. If the products are aimed for enhancing the soil for maintaining liquids or for aquaculture, then the sheet is cut into small pieces and no perforation is usually required as the liquids enter through the cut sides.

## Claims

1. Expanded polystyrene food packaging tray, with the ability to absorb moisture inside it, said expanded polystyrene **characterized by** an external surface of hydrophobic closed cells forming an apparent surface glazing which is continuous and uniform and permits production of the material in a single layer without surface covering membranes for the retention of liquids inside it, non laminated, said expanded polystyrene being a mixture of general purpose crystal polystyrene and expandable polystyrene with an expanding agent, having an average molecular weight, Mw, between 140,000 and 360,000 as measured by a size exclusion chromatographer, said expanded polystyrene is perforated with a plurality of small openings on at least one side in order to permit the moisture absorption.

2. Expanded polystyrene food packaging tray, according to claim 1, **characterized by** that the mean molecular weight, by weight, Mw, ranges preferably between 170,000 and 330.000, as measured by a size exclusion chromatographer.

3. Expanded polystyrene food packaging tray, according to claim 1, **characterized by** that the mean molecular weight, by weight, Mw, ranges more preferably between 210,000 and 310,000, as measured by a size exclusion chromatographer.

4. Method for the production of expanded polystyrene food packaging tray with use of an extruder, said expanded polystyrene having moisture absorption capability, said expanded polystyrene food packaging tray **characterized by** its external surfaces are of a closed cell type hydrophobic forming an apparent surface glazing which is continuous and uniform enough that the material is of a single layer without the requirement for surface covering membranes for the retention of liquids, said material being a mixture of general purpose crystal polystyrene and expanded polystyrene and expanding agent with an average molecular weight by weight, Mw, between 140,000 and 360,000 as measured by a size exclusion chromatographer, said expanded polystyrene being perforated with a plurality of small openings on at least one side in order to permit moisture absorption.

5. Method for the production of expanded polystyrene food packaging tray, according to claim 4, **characterized by** that the mean molecular weight, Mw, ranges preferably between 170,000 and 330,000, as measured by a size exclusion chromatographer.

6. Method for the production of expanded polystyrene food packaging tray, according to claim 4, **characterized by** that the mean molecular weight, Mw, ranges more preferably between 210,000 and 310,000, as measured by a size exclusion chromatographer.

## Patentansprüche

1. Lebensmittelverpackungsschale aus geschäumtem Polystyrol mit der Fähigkeit, Feuchtigkeit in ihr aufzunehmen und **dadurch gekennzeichnet, dass** ihre äußeren Oberflächen aus einem geschlossenen Zelltyp bestehen und somit hydrophob sind. Dadurch wird eine sichtbare Oberflächenglasur gebildet, die durchgehend und gleichförmig genug ist, dass das hergestellte Material aus einer Einzelschicht besteht, ohne Oborfiächenbeschichtung mit Membranen für die Rückhaltung innerer Flüssigkeiten (unbeschichtet). Das Material ist eine Mischung aus universellem Kristallpolystyrol und geschäumtem Polystyrol, welches das Quellmittel enthält, mit einer durchschnittlichen relativen Molekülmasse von 140.000 bis 360.000, die mit Hilfe der Größenausschlusschromatographie ermittelt wurde. Die besagte Schale aus geschäumtem Polystyrol ist mindestens auf einer Seite mit einer Vielzahl kleiner Öffnungen perforiert, um die Feuchtigkeitsaufnahme zu ermöglichen.

2. Lebensmittelverpackungsschale aus geschäumtem Polystyrol gemäß Anspruch 1, **dadurch gekennzeichnet, dass** die durchschnittliche relative Molekülmasse vornehmlich von 170.000 bis 330.000 reicht, die mit Hilfe der Größenausschlusschromatographie ermittelt wurde.

3. Lebensmittelverpackungsschale aus geschäumtem Polystyrol gemäß Anspruch 1, **dadurch gekennzeichnet, dass** die durchschnittliche relative Molekülmasse vornehmlicher von 210.000 bis 310.000 reicht, die mit Hilfe der Größenausschlusschromatographie ermittelt wurde.

4. Verfahren zur Herstellung einer Lebensmittelverpackungsschale aus geschäumtem Polystyrol (mit Hilfe eines Extruders) mit der Fähigkeit, Feuchtigkeit in ihr aufzunehmen und
**dadurch gekennzeichnet, dass** ihre äußeren Oberflächen aus einem geschlossenen Zelltyp bestehen und somit hydrophob sind. Dadurch wird eine sichtbare Oberflächenglasur gebildet, die durchgehend und gleichförmig genug ist, dass das hergestellte Material aus einer Einzelschicht besteht, ohne Oberflächenbeschichtung mit Membranen für die Rückhaltung innerer Flüssigkeiten (unbeschichtet). Das Material ist eine Mischung aus universellem Kristallpolystyrol und geschäumtem Polystyrol, welches das Quellmittel enthält, mit einer durchschnittlichen relativen Molekülmasse von 140.000 bis 360.000, die mit Hilfe der Größenausschlusschromatographie ermittelt wurde. Die besagte Schale aus geschäumtem Polystyrol ist mindestens auf einer Seite mit einer Vielzahl kleiner Öffnungen perforiert, um die Feuchtigkeitsaufnahme zu ermöglichen.

5. Verfahren zur Herstellung einer Lebensmitteiverpackungsschale aus geschäumtem Polystyrol gemäß Anspruch 4, **dadurch gekennzeichnet, dass** die durchschnittliche relative Molekülmasse vornehmlich von 170.000 bis 330.000 reicht, die mit Hilfe der Größenäusschlusschromatographie ermittelt wurde.

6. Verfahren zur Herstellung einer Lebensmittelverpackungsschale aus geschäumtem Polystyrol gemäß Anspruch 4, **dadurch gekennzeichnet, dass** die durchschnittliche relative Molekülmasse vornehmlicher von 210.000 bis 310.000 reicht, die mit Hilfe der Größenausschlusschromatographie ermittelt wurde.

## Revendications

1. Plateau de conditionnement alimentaire de polystyrène expansé, ayant la capacité d'absorber l'humidité, **caractérisé par** ses parois externes de type alvéoles fermées, hydrophobe. De cette manière, une surface d'aspect lisse est formée, suffisamment continue et uniforme pour que le matériau produit soit mono-couche, sans qu'il y ait besoin de recouvrir la surface d'un film pour retenir les liquides à l'intérieur (non laminé). Le matériau est un assemblage de polystyrène cristal ordinaire et de polystyrène expansible, contenant un agent d'expansion dont la masse moléculaire moyenne, par unité de masse, Mw, se situe entre 140 000 et 360 000, selon les mesures d'un chromatographe exclusion stérique. Le plateau de polystyrène expansé considéré est perforé d'une multitude de petites ouvertures sur au moins une des parois afin de permettre l'absorption de l'humidité.

2. Plateau de conditionnement alimentaire en polystyrène expansé, conformément à l'exigence 1, **caractérisé par** une masse moléculaire moyenne, par unité de masse, Mw, située de préférence entre 170 000 et 330 000, selon les mesures d'un chromatographe à exclusion stérique.

3. Plateau de conditionnement alimentaire en polystyrène expansé, conformément à l'exigence 1, **caractérisé par** une masse moléculaire moyenne, par unité de masse, Mw, située de préférence entre 210 000 et 310 000, selon les mesures d'un chromatographe à exclusion stérique.

4. Méthode de production d'un plateau de conditionnement alimentaire en polystyrène expansé, par l'action d'un extrudeur, ayant la capacité d'absorber l'humidité, **caractérisé par** ses parois externes de type alvéoles fermées, hydrophobe. De cette manière, une surface d'aspect lisse est formée, suffisamment continue et uniforme pour que le matériau produit soit mono-couche, sans qu'il y ait besoin de recouvrir la surface d'un film pour retenir les liquides à l'intérieur (non laminé). Le matériau est un assemblage de polystyrène cristal ordinaire et de polystyrène expansible, contenant un agent d'expansion dont la masse moléculaire moyenne, par unité de masse, Mw, se situe entre 140 000 et 360 000, selon les mesures d'un chromatographe exclusion stérique. Le plateau de polystyrène expansé considéré est perforé d'une multitude de petites ouvertures sur au moins une des parois afin de permettre l'absorption de l'humidité.

5. Méthode de production d'un plateau de conditionnement alimentaire en polystyrène expansé, conformément à l'exigence 4, **caractérisé par** une masse moléculaire moyenne, par unité de masse, Mw, située de préférence entre 170 000 et 330 000, selon les mesures d'un chromatographe à exclusion stérique.

6. Méthode de production d'un plateau de conditionnement alimentaire en polystyrène expansé, conformément à l'exigence 4, **caractérisé par** une masse moléculaire moyenne, par unité de masse, Mw, située de préférence entre 210 000 et 310 000, selon les mesures d'un chromatographe à exclusion stérique.
